(19) Europäisches Patentamt
European Patent Office
Office européen des brevets

(11) **EP 4 730 750 A1**

(12) **EUROPEAN PATENT APPLICATION**

(43) Date of publication:
**22.04.2026 Bulletin 2026/17**

(21) Application number: **25192880.0**

(22) Date of filing: **30.07.2025**

(51) International Patent Classification (IPC):
**H04L 67/12** (2022.01)   **H04L 41/16** (2022.01)

(52) Cooperative Patent Classification (CPC):
**H04L 41/16; H04L 67/12**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **07.08.2024 IN 202411059578**

(71) Applicant: **Schneider Electric Systems USA, Inc.**
**Foxborough, MA 02035 (US)**

(72) Inventors:
• **NALALA POCHAIAH, Anil Kumar**
  **500020 HYDERABAD (IN)**
• **MURTHY CHETAN, Narayana**
  **560097 BANGALORE (IN)**

(74) Representative: **Plasseraud IP**
  **104 Rue de Richelieu**
  **CS92104**
  **75080 Paris Cedex 02 (FR)**

Remarks:
Claims 16 to 20 are deemed to be abandoned due to non-payment of the claims fees (Rule 45(3) EPC).

(54) **ENABLING INDUSTRIAL AUTOMATION ASSETS WITH WEB OF THINGS DESCRIPTIONS FOR INDUSTRIAL CONNECTIVITY**

(57)   System and method of interoperability for managing assets of an industrial process. An artificial intelligence/machine learning (AI/ML) engine receives a protocol-specific device description associated with each of the assets, maps the protocol-specific device description associated with each of the assets to a corresponding Web of Things (WoT) Thing Description, and generates code enabling Industrial Internet of Things (IIoT) connectivity of the asset to a control system and/or to other assets of the industrial process via the Web.

FIG. 2A

**EP 4 730 750 A1**

**Description**

CROSS-REFERENCE TO RELATED APPLICATION

This application claims priority from Indian Patent Application No. 202411059578, filed August 7, 2024, the entire disclosure of which is expressly incorporated herein by reference, including the contents and teachings of any references contained therein.

BACKGROUND

Device manufacturers share device description files to allow end users the ability to control their hardware. Industrial devices are often described through device description files in formats such as Device Description Language (DDL), Electronic Device Description Language (EDDL), Generic Description Language (GDL), Field Device Tool Device Type Manager (FDT DTM), and the like.

Some DDLs, for instance, use an XML-encoded markup language that define sensors, actuators, transmitters, I/O transducers, valves, network drives, and more complex devices. It provides an "electronic datasheet" for devices that are readable to both humans and machines. It bridges between the physical and digital worlds in programmable pervasive spaces and enables automatic integration of devices. DDL enables a uniform schema to describe sensors and devices.

Similarly, EDDL is the standard device description language at the core of software used with various intelligent device protocols like Modbus, HART, FOUNDATION fieldbus, and PROFIBUS. EDDL serves as a single common language that enables users to integrate information from different kinds of devices using different protocols. EDDL can be likened to HTML (Hyper Text Markup Language), the underlying technology that makes information from a variety of sources easy to access on the Internet using any kind of computer. Similarly, EDDL is based on Standard Generalized Markup Language (SGML) and was developed to make information easy to access from various buses using various digital tools.

The manufacturer of the device makes an EDDL file, for example, to describe the various features of the device. This description also outlines the information that can be obtained from that particular device and how that information is to be obtained in terms of communication commands. These commands need to be issued in order to obtain information about a particular parameter of that device. This facilitates device management and addition of new field devices. In addition, a device's features can be updated by updating the device description file.

While device description languages are useful for managing devices, the devices themselves often communicate according to proprietary protocols, which limits interoperability, accessibility, and security. For instance, EDDL is dependent upon a vendor, and each vendor describes the format for its own proprietary devices. Vendors following the EDDL format can be interoperable with each other but not with vendors following DDL, GDL, FDT DTM, etc. In some instances, generating a Custom DDL is necessary when a device description cannot be obtained from a manufacturer. There is an industry need for a way to make the various device description formats compatible with one another and the larger internet as a whole.

SUMMARY

Aspects of the present disclosure permit devices to be directly addressable and discoverable over the web, thus promoting interoperability and reducing dependency on proprietary protocols. Utilizing the Web of Things (WoT) Thing Description (TD) to describe Industrial Internet of Things (IIoT) assets creates a more decentralized and standardized approach and uses web technologies and protocols (e.g., HTTP, RESTful APIs, and JSON) to enable direct communication and interaction between IIoT devices, applications, and services. Allowing IIoT assets to communicate, share data, and be controlled locally/remotely (whether on premise or in the cloud) promotes autonomous operation/intelligence.

In an aspect, an interoperability system manages assets of an industrial process, which includes a control system coupled to the assets and configured to generate control signals for controlling the assets. The assets perform operations of the industrial process in response to the control signals. The interoperability system comprises a device description processor communicatively coupled to the control system and a memory communicatively coupled to the device description processor. The memory stores computer-executable instructions that, when executed, configure the device description processor for executing an AI/ML engine. The AI/ML engine receives a protocol-specific device description associated with each of the assets, maps the protocol-specific device description associated with each of the assets to a corresponding WoT Thing Description, and generates code. When executed, the code enables IIoT connectivity of the asset to the control system and/or to other assets of the industrial process via the Web.

In another aspect, a method comprises receiving a protocol-specific device description associated with each of a plurality of assets of an industrial process. The industrial process includes a control system coupled to the assets and configured to generate control signals for controlling the assets. The assets perform operations of the industrial process in response to the control signals. The method further includes executing an AI learned model to map the protocol-specific device description associated with each of the assets to a corresponding WoT Thing Description and generating code. When executed, the code enables IIoT connectivity of the asset to the control system and/or to other assets of the industrial process via the Web.

Other aspects, advantages, and features of the present disclosure will be in part apparent and in part pointed out herein.

BRIEF DESCRIPTION OF THE DRAWINGS

FIG. 1 illustrates a process control system according to an embodiment.
FIGS. 2A and 2B illustrate an AI/ML-based system for auto-generating a WoT Thing Description and establishing IIoT connectivity using WoT Thing Description according to an embodiment.
FIG. 3 is a flow diagram illustrating an example process for training an AI engine according to an embodiment.
FIG. 4A illustrates a WoT Thing Description workflow according to an embodiment using an AI/ML Engine.
FIG. 4B illustrates a WoT Thing Description workflow according to an embodiment using an Agentic Engine.
FIG. 5 illustrates an example process for mapping a 4-20 mA closed-loop device into a WoT Thing Description according to an embodiment.

Corresponding reference characters indicate corresponding parts throughout the drawings.

DETAILED DESCRIPTION

The features and other details of the concepts, systems, and techniques sought to be protected herein will now be more particularly described. It will be understood that any specific embodiments described herein are shown by way of illustration and not as limitations of the disclosure and the concepts described herein. Features of the subject matter described herein can be employed in various embodiments without departing from the scope of the concepts sought to be protected.

In the traditional IIoT paradigm, devices are connected to the internet and communicate with centralized cloud-based services. This has issues like lack of interoperability, and increased latency due to reliance on cloud services for processing data.

Web of Things describes a set of standards by the World Wide Web Consortium (W3C) for the interoperability of different Internet of things (IoT) platforms and application domains. The goal of the WoT is to preserve and complement existing IoT standards and solutions to improve the interoperability, accessibility, scalability, and security. The key components of WoT are: Thing Description, WoT application programming interfaces (APIs), and WoT gateways. When the WoT is combined with artificial intelligence (AI) and/or machine learning (ML), it opens new possibilities for intelligent and dynamic interactions between devices and systems.

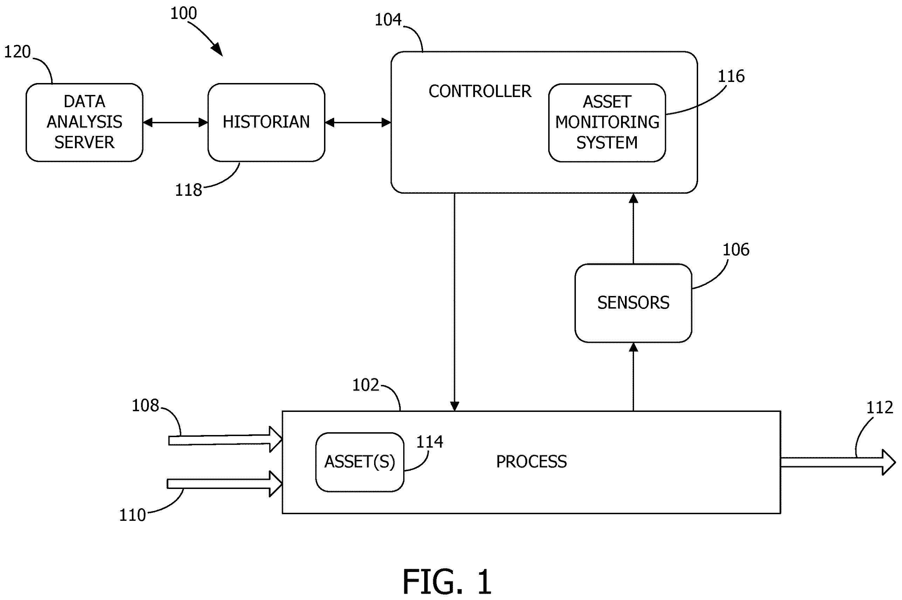

FIG. 1 displays the basic structure of an example process control system 100. In an embodiment, at least one process 102 is communicatively connected to a controller 104 and sensors 106. Controllers 104 can include Programable Logic Controllers (PLCs), Supervisory Control and Data Acquisition (SCADAs), Human-Machine Interfaces (HMIs) Data Acquisition Systems (DASs), and the like. The process 102 has inputs 108 and 110 that comprise the necessary inputs for the process to create an output 112. In an embodiment, the input 108 includes energy for running process 102 and input 110 includes physical or chemical raw materials for use in process 102. The output 112 comprises physical or chemical products from the process 102 or energy production in the form of electricity or the like.

The sensors 106 may include IEDs (intelligent electronic devices). As used herein, an IED is a computational electronic device optimized to perform a particular function or set of functions. Examples of IEDs include smart utility meters, smart sensors, power quality meters, and other metering devices.

The controller 104 sends data to the at least one process 102 to direct the operations thereof according to the goals of controller 104. The data sent comprises commands that operate various types of process elements, or assets 114, of the process 102, such as pumps, motors, valves, actuators, electrostatic precipitators, or the like. The asset 114 may be any mechanical, chemical, electrical, biological, or combined mechanism or set of mechanisms that is used to convert energy and materials into value added products or production. In addition, asset 114 may include electrical or electronic equipment, for example, such as machinery associated with the industrial process 102 (e.g., a manufacturing or natural resource extraction operation). The assets 114 may also include the controls and/or ancillary equipment associated with the industrial process 100, for example, field devices (e.g., RTUs, PLCs, actuators, sensors, HMIs) that are used perform, analyze and/or control process variable measurements. It is to be understood that sensors 106 may also be considered assets.

In one or more embodiments, assets 114 are installed or located in one or more facilities (i.e., buildings) or other physical locations (i.e., sites) associated with the industrial process 102. The facilities may correspond to, for example, industrial buildings or plants. Additionally, the physical locations may correspond to, for example, geographical areas or locations.

The sensors 106 monitor process 102 at various points and gather data from those points. The sensors 106 then send the data gathered to controller 104. Based on the gathered data, controller 104 can send additional commands to process 102. In this way, the system 100 forms a control feedback loop, where controller 104 reacts to changes in process 102 as observed by sensors 106. Different actions carried out by process 102 according to the commands of controller 104 may change the data being gathered by sensors 106, thus causing further adjustments by controller 104 in response to those changes. By implementing this control feedback loop, the at least one process 102 can be controlled by the controller 104 in an efficient manner.

To ensure safe operation, controller 104 includes one or more condition or asset monitoring systems 116 responsive to sensors 106 for performing vibration analysis, motor current signature analysis, ultrasonic analysis, thermal analysis, and the like on critical assets 114. In the illustrated embodiment, system 100 includes a historian 118 configured to capture and store industrial data, including process(es), alarm, and event history data. The system 100 also includes one or more servers, referred to as a data analysis server 120, for analyzing the stored industrial data.

Aspects of the present disclosure permit devices, such as assets 114, to be directly addressable and discoverable over the web, thus promoting interoperability and reducing dependency on proprietary protocols. To bring more clarity: Any vendor specific asset will communicate using a defined protocol, such as Modbus, PROFIBUS, HART, Fieldbus, OPC, etc., by the vendor. With the help of protocol details available over WoT Thing Description, aspects of the present disclosure permit connection with these assets and control over the web through protocol commands. Otherwise, vendor asset communication and control was restricted to develop its own HMIs to monitor and control the asset. This dependency is removed with WoT Thing Description over web.

Utilizing the WoT Thing Description to describe IIoT assets creates a more decentralized and standardized approach and uses web technologies and protocols (e.g., HTTP, RESTful APIs, and JSON) to enable direct communication and interaction between IIoT devices, applications, and services.

Allowing IIoT assets to communicate, share data, and be controlled locally/remotely (whether on premise or in the cloud) promotes autonomous operation/intelligence. In an embodiment, an AI/ML Engine such as AI Generative Pre-Trained Transformer (AI-GPT) model provides Web of Things generation and enablement/onboarding for assets. In another embodiment, an Agentic Engine provides Web of Things generation and enablement/onboarding for assets. An Agentic Engine is an autonomous AI system that can independently plan, reason, and execute multistep workflows.

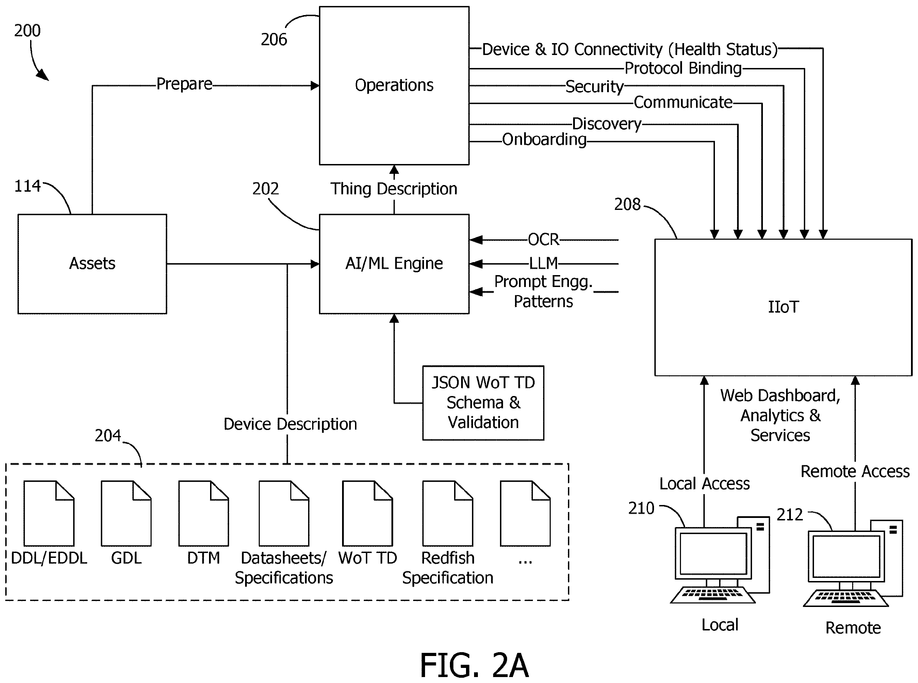

Referring now to FIG. 2A, a system 200 embodying aspects of the present disclosure provides AI/ML-based generation of WoT Thing Descriptions and enablement/onboarding of assets 114. In an embodiment, an AI/ML engine 202 receives input of the device descriptions 204 of assets 114 in their original formats (e.g., DDL/EDDL, Custom DDL, GDL, FDT DTM, datasheets/specifications, Redfish specification/ WoT Thing Description, etc.). In an embodiment, the AI/ML engine 202 comprises a device description processor executing computer-executable instructions for one or more of large language models (LLM), optical character recognition (OCR), prompt engineering, Small Language Models (SLM), and the like to generate a WoT Thing Descriptions for assets 114.

According to an embodiment, the AI/ML engine 202 is also modeled/trained using SLM, which would enable running on CPUs, smartphones and the like thus eliminating the need for dedicated GPU servers to train the LLM. As reliable SLM models (Phi-3) are developed (e.g., Llama, Mistral, etc.), this auto- generating WoT Thing Description and enabling over web can be achieved through small scale devices such as mobile devices like smartphones.

In addition, AI/ML engine 202 executes a validation of the generated Thing Description according to the WoT JSON schema. As shown in FIG. 2A, at 206, the system 200 enables IIoT connectivity at 208 for assets 114 by providing one or more of: device and IO connectivity (health status), protocol binding, security, communication, discovery, and onboarding. The asset is connected to the IIoT 208 through an API (e.g., MQTT, CoAP, HTTP/RESTful, OPC UA, etc.) using the asset's WoT Thing Description. According to an embodiment, operations at 206 include automatically generating, by the AI learned model, the corresponding WoT Thing Description for each of the assets. Once the asset 114 is connected to the IIoT 208, one or more local computers 210 and/or one or more remote computers 212 can access and manage assets 114 via a web dashboard, analytics, and services.

In an embodiment, AI/ML engine 202 utilizes a device description of asset 114 to generate a WoT Thing Description for integration with the WoT. As described above, device manufacturers provide device descriptions in various formats such as Device Description Language (DDL), Electronic Device Description Language (EDDL), Generic Description Language (GDL), Field Device Tool Device Type Manager (FDT DTM), and the like. However, in some situations a Custom DDL is necessary. For example, a Custom DDL is necessary for devices employing 4-20 mA current loops. The 4-20 mA standard is an analog current loop widely used in industrial automation where a process variable is represented by a proportional current signal ranging from 4 mA (minimum) to 20 mA (maximum). This standard is a common communication method for analog measurements from devices and sensors 106 to controllers 104. While the 4-20 mA signal is an analog representation of a physical value, Device Description Languages (DDLs) typically focus on digital devices and values. To create a Custom DDL for these devices, the 4-20 mA analog measurements is converted to a digital representation.

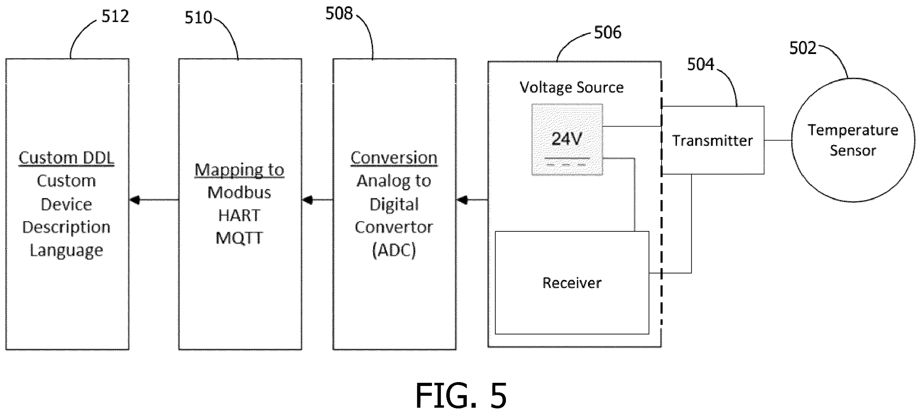

FIG. 5 illustrates an example process for mapping a 4-20 mA closed-loop device into a WoT Thing Description according to an embodiment. In an embodiment, a sensor (e.g., a temperature sensor 502) provides an analog signal representative of a measured process variable (e.g., temperature). A transmitter 504 converts the output temperature signal from sensor 502 into a current signal. As is known in the art, a 4 mA current value represents 0% of scale, a 20 mA current value represents 100% of scale, and any current value in between 4 and 20 mA represents a commensurate percentage between 0% and 100%. A 2-wire loop routes the 4-20 mA signal from the transmitter 504 to a receiver 506 and back again. The receiver 506 receives and interprets the analog 4-20 mA current signal. An Analog to Digital Converter (ADC) 508 (e.g., ADS1115, built-in PLC ADC, IoT gateway, etc.) first converts the 4-20 mA to voltage (1-5V) using a resistor (e.g., 250 $\Omega$), which generates an ADC value. In an embodiment, the ADC value is converted to process units using the following scaling formula:

$$Process\ Unit = \left(\frac{ADC\_Reading}{Max\_ADC}\right) \times (Max\_Range - Min\_Range) + Min\_Range$$

For example, the conversion from an ADC value to process units for a Temperature Sensor with a 0-100° C range is:

$$Temperature = \left(\frac{ADC\_Reading}{4095}\right) \times (100 - 0) + Min\_Range$$

Once converted, the process unit is written to a register 510, such as a Modbus Holding Register (e.g., 40001, 40002, etc.), for mapping to a specific communication protocol. Any number of communication protocols such as Modbus, HART, MQTT, FOUNDATION fieldbus, and PROFIBUS can be used. The converted value in process units is then available for use in generating a Custom DDL 512. Once the Custom DDL 512 is generated, it can be used in the same manner as any device description.

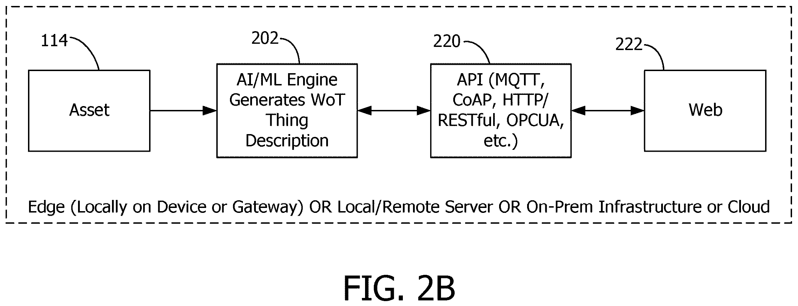

FIG. 2B is a flow diagram illustrating an example process for AI/ML-based asset-IoT connectivity with WoT. The process begins with the asset 114 and its device description that is used as input for the AI/ML engine 202. The AI/ML engine 202 comprises a device description processor to generate a WoT Thing Description. The WoT Thing Description establishes a connection to the web 222 through an API 220. This approach to AI/ML-based asset-IoT connectivity with WoT offers several advantages. It enables IoT connectivity for existing or legacy assets in all device descriptions formats. This is particularly significant in industrial settings where a substantial amount of valuable equipment often predates modern IoT standards. By creating WoT Thing Descriptions for these assets, they can be integrated into connected IIoT systems without requiring complete overhauls or expensive updates and replacements.

The process facilitates online monitoring and continuous training of updated device description data and the associated repository or database. This dynamic feature allows the AI/ML engine 202 to adapt and learn from the evolving characteristics and operational data of the connected assets. Industrial environments frequently undergo changes, such as the integration of new devices or modifications to existing device features. These changes necessitate updates to device descriptions to ensure ongoing safety and operational integrity. Regularly updating the AI/ML engine 202 with current device descriptions maintains the accuracy and relevance of their digital representations.

A core feature of the AI/ML-based generation of WoT Thing Descriptions is employing technologies such as Large Language Models (LLMs), Optical Character Recognition (OCR), and sophisticated prompt engineering techniques. This intelligent generation process can automate and streamline the creation of device descriptions.

This process is also highly extendible and capable of being deployed across various infrastructure layers. For instance, it can be deployed on edge devices both locally on the device or through a gateway. It can be deployed through local or remote servers, on-premise infrastructures, or cloud environments. This flexibility allows industrial organizations to tailor the solution to their specific architectural needs and constraints.

The generated WoT Thing Descriptions serve as the foundation for "communication connectivity" API modeling and associated contextual analytics and services. The WoT Thing Descriptions not only define the asset but also build upon that to enable the creation of standardized APIs for interacting with the asset and deriving meaningful insights from its data.

AI/ML-based asset-IoT connectivity with WoT can provide recommendations for appropriate protocol communication based on the Thing Description. The recommendation can consider the protocols supported by the asset itself, such as suggesting Modbus versus OPC-Modbus. This intelligent approach to protocol binding simplifies asset integration and onboarding.

In addition, this approach includes recommendations for web protocols like HTTP, CoAP, and MQTT, considering both REST versus publish/subscribe, as well as combinations of HTTP, CoAP, REST, MQTT, and the like. The recommended protocol will depend, in part, on the resources such as memory and power requirements of the asset. For example, CoAP web protocol is preferred over HTML or REST for an asset with constrained resources such as low memory and power requirements. These assets with constrained resources are often embedded hardware. This ensures robust and efficient data exchange between the assets and web-based applications. It also allows the delivery of live data for real-time monitoring and analysis.

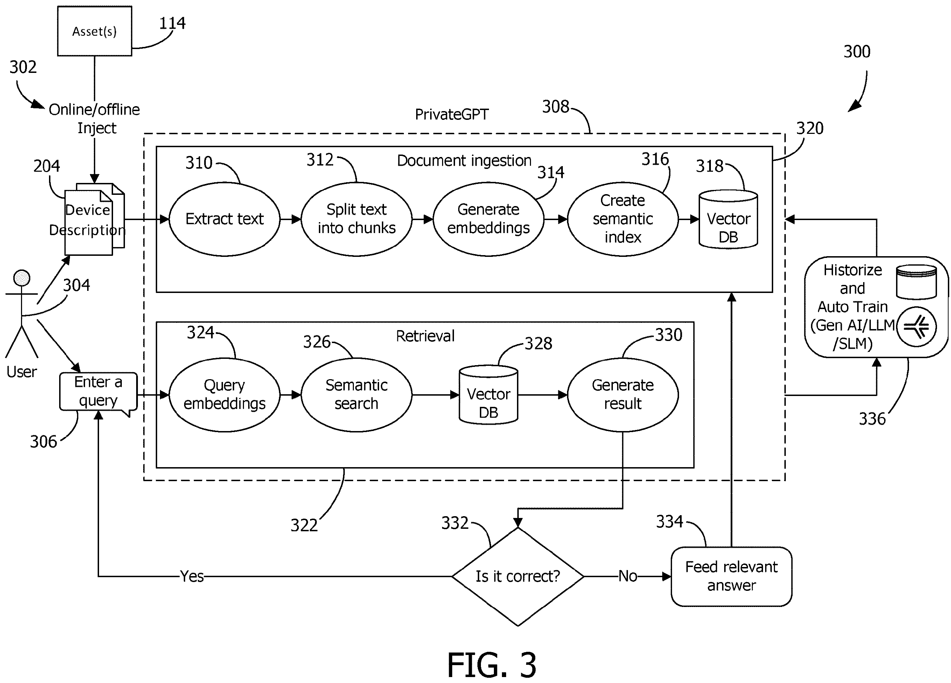

FIG. 3 is a flow diagram illustrating an example AI-GPT process suitable for historizing and training AI/ML engine 202 (or AI/ML model). The process begins with a device description 204 from one of the assets 114 in their original formats (e.g., DDL/EDDL, Custom DDL, GDL, FDT DTM, datasheets/specifications, Redfish specification/ WoT TD, etc.). The device descriptions are provided as input from an online-offline injection 302. In an embodiment, the online injection transmits the device descriptions in real-time or near real-time directly through an API or network system utilizing network protocols. In another embodiment, when the data source for the device descriptions is not actively connected to a network, the offline injection is used. The offline injection method temporarily stores data. Once a network connection is reestablished, the stored data is transmitted to the AI/ML engine 202.

The AI/ML engine 202 in the present embodiment is implemented using exemplary PrivateGPT 308, but it is understood that the AI/ML engine 202 can be developed by modifying or adapting or creating an AI/ML engine or model that operates in accordance with principles of Agentic AI, Generative AI, AI/ML Model, a Large Language Model, a Small Language Model, etc., where the AI/ML engine 202 is developed and customized, as discussed herein, to help provide Web of Things generation and enablement/onboarding for assets. The AI/ML engine 202 need not be restricted to a private one.

The PrivateGPT 308 uses a device description processor to perform document ingestion 320 and subsequent retrieval 322 in response to a user query 306. In some embodiments, the user may correspond to any entity in operable communication with a computing device, such as another computing system. Document ingestion is how device description data 204 is processed by the model. PrivateGPT 308 extracts the text 310 from the device description 204. The extracted text is split into smaller, manageable chunks 312. Splitting the text into smaller chunks allows the AI/ML engine to handle large device descriptions. Each chunk of text is transformed into a vector representation or embedding 314.

These embeddings 314 capture the semantic meaning of the extracted text 310. As such, text with similar meanings will have vector representations that are close to each other. Representing the data in this way allows the AI/ML engine 202 to understand the underlying concepts and relationships within the text. With vector representation, PrivateGPT is not limited to keyword matching when executing a query. The AI/ML engine 202, PrivateGPT 308 in the illustrated embodiment, creates a semantic index 316. The semantic index 316 is a data structure built upon the generated embeddings/vector representations 314. The semantic index 316 allows PrivateGPT to quickly find relevant text chunks based on the semantic similarity to an input query. The embeddings 314 and the semantic index 316 are stored in a vector database 318. A vector database 318 is a specialized database that stores and queries the vector representations of the data.

As for the retrieval process 322 in FIG.3, it begins with the user 304 entering a query 306. The query is embedded 324, a process analogous to the embedding generation 314 during document ingestion 320. The query is transformed into a vector representation, allowing the AI/ML engine 202 to understand the meaning of the query rather than relying on matching keywords. PrivateGPT 308 performs a semantic search 326 using the vector database 328 to generate a result 330. The semantic search 326 leverages the semantic index 316 created during document ingestion 320 and stored in the vector database 318 to find the stored device descriptions 204 whose embeddings are most similar to the embedding of the user's query.

A verification step occurs at 332 to determine if the generated result 330 is accurate. If the result is deemed correct, PrivateGPT 308 is ready to process another user query 306. If the result is determined to be incorrect, a feedback mechanism is engaged. PrivateGPT 308 is fed the relevant answer 334. This relevant answer 334 triggers the document ingestion 320 process again, but this time incorporating the relevant information. This feedback loop is a key aspect of how the AI/ML engine 202 is historized and auto-trained 336. By learning from its mistakes and incorporating relevant answers through the ingestion process, the AI/ML engine continuously refines its understanding and improves the accuracy of its responses over time.

In the embodiment of FIG.3, the document ingestion 320 retrieval process 322 are shown in a linear fashion with one device description 204 or query 306 being processed through Private GPT 308 at a time. PrivateGPT 308 or any AI/ML engine 202 used is capable of processing several device descriptions 204 and queries 306 at once. For example, the engine's batch size can be adjusted to increase the amount of data being processed at a time.

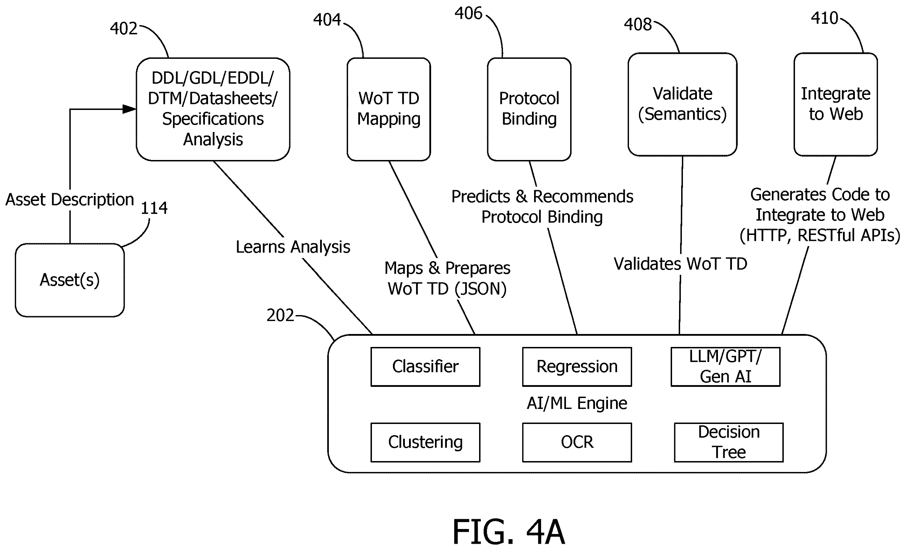

FIG. 4A illustrates a WoT Thing Description workflow in accordance with embodiments of the present disclosure for migrating legacy asset descriptions (e.g., DDL, GDL, EDDL) and creating WoT Thing Descriptions for assets 114. In an

embodiment, at 402, AI/ML engine 202 learns to analyze the device descriptions 204 of assets 114 in their original formats (e.g., DDL/EDDL, GDL, FDT DTM, datasheets/specifications, etc.). At 404, AI/ML engine 202 maps and prepares WoT Thing Descriptions using, for example, JSON. The AI/ML engine 202 at 406 predicts and recommends a suitable protocol binding for each particular asset 114 based on its device description and then validates each WoT Thing Description at 408. To permit connectivity, AI/ML engine 202 generates code (e.g., HTTP, RESTful APIs, etc.) to integrate the validated WoT Thing Descriptions to the Web for improved interoperability, accessibility, scalability, and security.

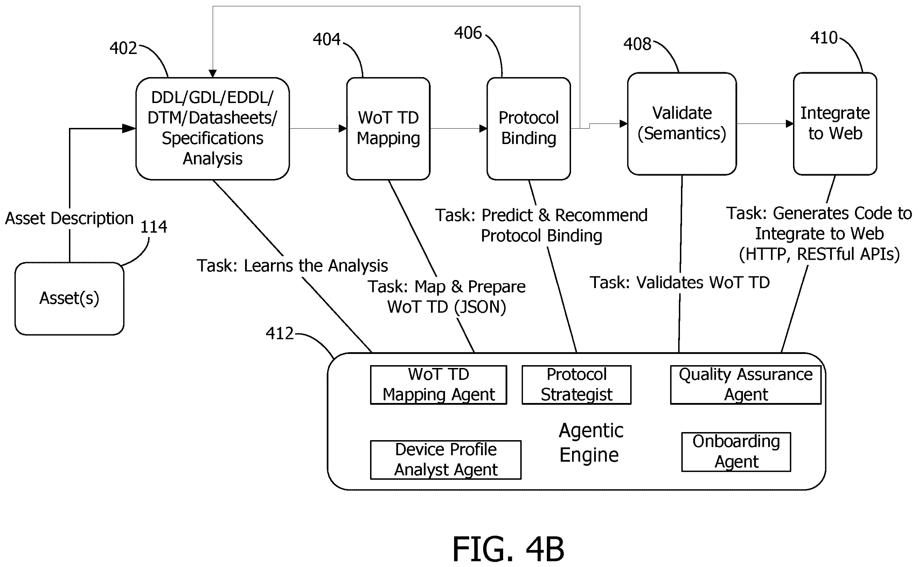

FIG. 4B illustrates a WoT Thing Description workflow in accordance with embodiments of the present disclosure for migrating legacy asset descriptions (e.g., DDL, GDL, EDDL) and creating WoT Thing Descriptions for assets 114. In an embodiment, at 402, Agentic Engine 412 learns to analyze the device descriptions 204 of assets 114 in their original formats (e.g., DDL/EDDL, GDL, FDT DTM, datasheets/specifications, etc.). At 404, Agentic Engine 412 maps and prepares WoT Thing Descriptions using, for example, JSON. The Agentic Engine 412 at 406 predicts and recommends a suitable protocol binding for each particular asset 114 based on its device description and then validates each WoT Thing Description at 408. To permit connectivity, Agentic Engine 412 generates code (e.g., HTTP, RESTful APIs, etc.) to integrate the validated WoT Thing Descriptions to the Web for improved interoperability, accessibility, scalability, and security.

While the AI/ML engine 202 from FIG. 4A generates device descriptions or protocol mappings when prompted, the Agentic Engine 412 of FIG. 4B, is capable of autonomously discovering devices, analyzing their capabilities, determining optimal integration strategies, executing the full onboarding workflow, validating results, and handling exceptions. The Agentic Engine 412 is more autonomous as it can work towards creating WoT Thing Descriptions for assets and integrating them to the web without needing the same level of human intervention as the AI/ML engine 202. Aspects of the present disclosure are applicable to smart home applications, mash ups of IoT apps via unified WoT APIs, and Edge Unified Architecture (UA) translators (e.g. Modbus to OPC UA). In addition, aspects of the present disclosure are applicable to a natural language interface. By integrating WoT and LLMs, industrial automation systems can be controlled and monitored using natural language commands. Moreover, aspects of the present disclosure are applicable to intelligent decision support. By analyzing real-time data, historical records, and contextual information, LLMs assist operators in making informed decisions.

The Web of Things is an extension of the Internet of Things (IoT) that focuses on enabling seamless interoperability and integration of IoT devices and services through web standards. The inventors recognize the importance of interoperability and connectivity in delivering comprehensive solutions to industrial automation customers. The WoT provides a standardized framework that allows different IoT devices, platforms, and services to communicate with each other, regardless of their underlying technologies or protocols.

The adoption of the WoT offers numerous benefits including improved interoperability, accessibility, scalability, and security. By adhering to web standards, the WoT enhances the ability of different IoT systems to work together. This improved interoperability allows for seamless data exchange and coordination actions between previously isolated devices. This is especially true and important in industrial settings where a multitude of assets with varying communication protocols must be integrated for efficient operations. Using the inherent flexibility of the WoT's architecture and applying it to IIoT allows for scalability where industrial systems can seamlessly grow and integrate more assets/devices. Connecting these assets/devices to the WoT improves safety and security as devices can be monitored, analyzed, and configured remotely and in real time.

An additional benefit to adopting the WoT is the unified user experience including application mashups, intuitive web-based interfaces, easy device discovery and seamless integration. Application mashups become simpler to develop where the combination of functionalities from different devices and services can be integrated into applications. Intuitive web-based interfaces provide familiar and accessible tools for monitoring and controlling industrial assets. Easy device discovery through the WoT simplifies the process of identifying and connecting new devices to the industrial system. With seamless integration, the underlying complexities of different technologies are abstracted away. This offers a unified and intuitive way to interact with devices/assets in a connected industrial setting.

Connecting industrial assets and devices to the WoT offers data-driven decision-making, optimized operations, and improved energy efficiency. Industrial organizations can leverage WoT connectivity to make more informed and data-driven decisions. Real-time data sharing and analysis enables the optimization of processes. Workflows become smoother and can lead to reduced system downtime. This also allows for more precise resource management, and thus improved energy efficiency.

There is reduced time and cost in managing an asset's life cycle. By automating these assets and their device's through the WoT, managing them becomes a simpler process. Devices, even non smart devices, can be automatically deployed to an industrial system. From there, the devices can be monitored, configured, and analyzed locally or remotely. When a device reaches the end of its operational life or is no longer required within the industrial system, the WoT can streamline the decommissioning process as well. Just as deployment can be automated, the removal and logical disconnection of a device from the network can also be managed through the WoT framework.

By enforcing the use of web standards for communication and data exchange, the WoT ensures standardized interactions across different devices. This standardization leads to greater consistency and uniformity in how devices are managed, regardless of the device's underlying technology or lack thereof.

WoT integration offers enhanced scalability and flexibility for accommodating a growing number of devices, users, and data. This leads to the ability to handle an increased workload and adapt to changing requirements. Industrial settings in particular need this scalability and flexibility where production demands can shift rapidly.

A additional noteworthy benefit to WoT integration is reduced development and delivery time. The industrial devices that are now connected to the WoT allows for developers to apply existing web development tools to them. This eliminates the need to learn and implement propriety industrial protocols for each device. With the WoT framework, every device has the potential to be a smart device.

Aspects of the present disclosure further include auto-generation of a WoT Thing Description for an asset participating in an industrial control system. For example, in a plant, a device from one manufacturer may be described using DDL. When encountering such device, whether by scanning physically or by identifying the asset using a machine-learned model for image recognition, the AI/ML engine 202 is configured in an embodiment to automatically create the WoT Thing Description format for the device (re-using the DDL details) and then link the device to the IIoT/IoT world by selecting proper/matched protocol binding(s).

Embodiments of the present disclosure may comprise a special purpose computer including a variety of computer hardware, as described in greater detail herein.

For purposes of illustration, programs and other executable program components may be shown as discrete blocks. It is recognized, however, that such programs and components reside at various times in different storage components of a computing device, and are executed by a data processor(s) of the device.

Although described in connection with an example computing system environment, embodiments within the disclosure are operational with other special purpose computing system environments or configurations. The computing system environment is not intended to suggest any limitation as to the scope of use or functionality of any aspect of the disclosure. Moreover, the computing system environment should not be interpreted as having any dependency or requirement relating to any one or combination of components illustrated in the example operating environment. Examples of computing systems, environments, and/or configurations that may be suitable for use with aspects of the disclosure include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Embodiments of the aspects of the present disclosure may be described in the general context of data and/or processor-executable instructions, such as program modules, stored one or more tangible, non-transitory storage media and executed by one or more processors or other devices. Generally, program modules include, but are not limited to, routines, programs, objects, components, and data structures that perform particular tasks or implement particular abstract data types. Aspects of the present disclosure may also be practiced in distributed computing environments where tasks are performed by remote processing devices that are linked through a communications network. In a distributed computing environment, program modules may be located in both local and remote storage media including memory storage devices.

In operation, processors, computers and/or servers may execute the processor-executable instructions (e.g., software, firmware, and/or hardware) such as those illustrated herein to implement aspects of the disclosure.

Embodiments may be implemented with processor-executable instructions. The processor-executable instructions may be organized into one or more processor-executable components or modules on a tangible processor readable storage medium. Also, embodiments may be implemented with any number and organization of such components or modules. For example, aspects of the present disclosure are not limited to the specific processor-executable instructions or the specific components or modules illustrated in the figures and described herein. Other embodiments may include different processor-executable instructions or components having more or less functionality than illustrated and described herein.

The order of execution or performance of the operations in accordance with aspects of the present disclosure illustrated and described herein is not essential, unless otherwise specified. That is, the operations may be performed in any order, unless otherwise specified, and embodiments may include additional or fewer operations than those disclosed herein. For example, it is contemplated that executing or performing a particular operation before, contemporaneously with, or after another operation is within the scope of the disclosure.

When introducing elements of the disclosure or embodiments thereof, the articles "a," "an," "the," and "said" are intended to mean that there are one or more of the elements. The terms "comprising," "including," and "having" are intended to be inclusive and mean that there may be additional elements other than the listed elements.

Not all of the depicted components illustrated or described may be required. In addition, some implementations and embodiments may include additional components. Variations in the arrangement and type of the components may be made without departing from the spirit or scope of the claims as set forth herein. Additional, different or fewer components may be provided and components may be combined. Alternatively, or in addition, a component may be implemented by several components.

The above description illustrates embodiments by way of example and not by way of limitation. This description enables one skilled in the art to make and use aspects of the disclosure, and describes several embodiments, adaptations, variations, alternatives and uses of the aspects of the disclosure, including what is presently believed to be the best mode of carrying out the aspects of the embodiments. Additionally, it is to be understood that the aspects of the disclosure are not limited in its application to the details of construction and the arrangement of components set forth in the following description or illustrated in the drawings. The aspects of the disclosure are capable of other embodiments and of being practiced or carried out in various ways. Also, it will be understood that the phraseology and terminology used herein is for the purpose of description and should not be regarded as limiting.

It will be apparent that modifications and variations are possible without departing from the scope of the disclosure defined in the appended claims. As various changes could be made in the above constructions and methods without departing from the scope of the disclosure, it is intended that all matter contained in the above description and shown in the accompanying drawings shall be interpreted as illustrative and not in a limiting sense.

In view of the above, it will be seen that at least some embodiments help to address at least some concerns discussed herein and that at least some embodiments help achieve and attain one or more advantageous results.

The Abstract and Summary are provided to help the reader quickly ascertain the nature of the technical disclosure. They are submitted with the understanding that they will not be used to interpret or limit the scope or meaning of the claims. The Summary is provided to introduce a selection of concepts in simplified form that are further described in the Detailed Description. The Summary is not intended to identify key features or essential features of the claimed subject matter, nor is it intended to be used as an aid in determining the claimed subject matter.

## Claims

1. An interoperability system for managing assets of an industrial process, the industrial process including a control system coupled to the assets and configured to generate control signals for controlling the assets, the assets performing operations of the industrial process in response to the control signals, the interoperability system comprising:

   a device description processor communicatively coupled to the control system; and
   a memory communicatively coupled to the device description processor, the memory storing computer-executable instructions that, when executed, configure the device description processor for executing an artificial intelligence/machine learning engine (AI/ML), wherein the AI/ML engine:

   receives a protocol-specific device description associated with each of the assets;
   maps the protocol-specific device description associated with each of the assets to a corresponding Web of Things (WoT) Thing Description; and
   generates code that, when executed, enables Industrial Internet of Things (IIoT) connectivity of each of the assets to the control system and/or to other assets of the industrial process via the Web.

2. The interoperability system of claim 1, wherein the computer-executable instructions, when executed, further configure the device description processor for training the AI/ML engine using a plurality of protocol-specific device descriptions.

3. The interoperability system in any one of claims 1-2, wherein the protocol-specific device description is selected from the group consisting of: DDL, GDL, EDDL, DTM, Device Description Language (DDL), Generic Description Language (GDL), Electronic Device Description Language (EDDL), Field Device Tool Device Type Manager (FDT DTM), datasheets, and specifications.

4. The interoperability system in any one of claims 1-3, wherein the protocol-specific device description is a Custom DDL, and wherein the Custom DDL is mapped from a 4-20 mA signal.

5. The interoperability system in any one of claims 1-4, wherein the AI/ML engine executes one or more of the following: a classifier, a clustering process, a regression process, a large language model (LLM), optical character recognition (OCR), prompt engineering, or a decision tree process.

6. The interoperability system in any one of claims 1-5, wherein the AI/ML engine predicts a protocol binding suitable for each of the assets based on the WoT Thing Description.

7. The interoperability system in any one of claims 1-6, wherein the AI/ML engine validates the WoT Thing Description according to a WoT JavaScript Object Notation (JSON) schema.

8. The interoperability system in any one of claims 1-7, wherein the AI/ML engine uses JSON to map the protocol-specific device description associated with each of the assets to the corresponding WoT Thing Description.

9. The interoperability system in any one of claims 1-8, wherein the AI/ML engine automatically generates the corresponding WoT Thing Description for each of the assets by re-using the protocol-specific device description and linking each of the assets to IIoT by selecting a protocol binding suitable therefor based on the WoT Thing Description.

10. A computer-implemented method comprising:

receiving a protocol-specific device description associated with each of a plurality of assets of an industrial process, the industrial process including a control system coupled to the assets and configured to generate control signals for controlling the assets, the assets performing operations of the industrial process in response to the control signals;
executing an artificial intelligence (AI) learned model to map the protocol-specific device description associated with each of the assets to a corresponding Web of Things (WoT) Thing Description; and
generating code that, when executed, enables Industrial Internet of Things (IIoT) connectivity of each of the assets to the control system and/or to other assets of the industrial process via the Web.

11. The method as set forth in claim 10, further comprising training the AI learned model using a plurality of protocol-specific device descriptions.

12. The method as set forth in any one of claims 10-11, wherein the protocol-specific device description is selected from the group consisting of: DDL, Custom DDL, GDL, EDDL, DTM, Device Description Language (DDL), Generic Description Language (GDL), Electronic Device Description Language (EDDL), Field Device Tool Device Type Manager (FDT DTM), datasheets, or specifications.

13. The method as set forth in any one of claims 10-12, wherein the protocol-specific device description is a Custom DDL, and further comprising mapping the Custom DDL from a 4-20 mA signal.

14. The method as set forth in any one of claims 10-13, wherein the AI learned model comprises one or more of the following: a classifier, a clustering process, a regression process, a large language model (LLM), optical character recognition (OCR), prompt engineering, or a decision tree process.

15. The method as set forth in any one of claims 10-14, further comprising predicting, by the AI learned model, a protocol binding suitable for the asset based on the WoT Thing Description.

16. The method as set forth in any one of claims 10-15, further comprising validating, by the AI learned model, the WoT Thing Description according to a WoT JavaScript Object Notation (JSON) schema.

17. The method as set forth in any one of claims 10-16, wherein an AI/ML engine uses JSON to map the protocol-specific device description associated with each of the assets to the corresponding WoT Thing Description.

18. The method as set forth in any one of claims 10-17, further comprising automatically generating, by the AI learned model, the corresponding WoT Thing Description for each of the assets.

19. The method as set forth in claim 18, wherein automatically generating the corresponding WoT Thing Description comprises re-using the protocol-specific device description and linking each of the assets to IIoT by selecting a protocol binding suitable therefor based on the WoT Thing Description.

20. The method as set forth in any one of claims 18-19, wherein automatically generating the corresponding WoT Thing Description comprises recommending one or more of HTTP, CoAP, REST, or MQTT protocols to support communication of live data based on one or more resource constraints of the asset.

FIG. 1

FIG. 2A

114 — Asset

202 — AI/ML Engine Generates WoT Thing Description

220 — API (MQTT, CoAP, HTTP/ RESTful, OPCUA, etc.)

222 — Web

Edge (Locally on Device or Gateway) OR Local/Remote Server OR On-Prem Infrastructure or Cloud

FIG. 2B

FIG. 3

EP 4 730 750 A1

402 ─╮
DDL/GDL/EDDL/
DTM/Datasheets/
Specifications
Analysis

404 ─╮
WoT TD
Mapping

406 ─╮
Protocol
Binding

408 ─╮
Validate
(Semantics)

410 ─╮
Integrate
to Web

Asset Description  114
Asset(s)

Learns Analysis

Maps & Prepares
WoT TD (JSON)

Predicts & Recommends
Protocol Binding

Validates WoT TD

Generates Code to
Integrate to Web
(HTTP, RESTful APIs)

202 ─╮

| Classifier | Regression | LLM/GPT/ Gen AI |
| --- | --- | --- |

AI/ML Engine

| Clustering | OCR | Decision Tree |
| --- | --- | --- |

# FIG. 4A

FIG. 4B

EP 4 730 750 A1

FIG. 5

Europäisches
Patentamt

European
Patent Office

Office européen
des brevets

## EUROPEAN SEARCH REPORT

**Application Number**

EP 25 19 2880

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 304 154 A1 (DAIKIN IND LTD [JP]) 10 January 2024 (2024-01-10) | 1-3,5,7, 8,10-12, 14 | INV. H04L67/12 H04L41/16 |
| A | * figures 1, 11 * * paragraph [0080] - paragraph [0089] * ----- | 4,6,9, 13,15 | |
| A | NOURA MAHDA ET AL: "Webifying Heterogenous Internet of Things Devices", 26 April 2019 (2019-04-26), ADVANCES IN DATABASES AND INFORMATION SYSTEMS; [LECTURE NOTES IN COMPUTER SCIENCE; LECT.NOTES COMPUTER] SPRINGER INTERNATIONAL PUBLISHING, CHAM, PAGE(S) 509 - 513, XP047511594, ISSN: 0302-9743 ISBN: 9783319104034 [retrieved on 2019-04-26] * page 1 - page 3 * ----- | 1-15 | |

**TECHNICAL FIELDS SEARCHED (IPC)**

H04L

The present search report has been drawn up for all claims

| Place of search | Date of completion of the search | Examiner |
|---|---|---|
| The Hague | 16 March 2026 | Gutiérrez García, J |

EPO FORM 1503 03.82 (P4C01)

Europäisches
Patentamt
European
Patent Office
Office européen
des brevets

**Application Number**

EP 25 19 2880

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☒ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

## ANNEX TO THE EUROPEAN SEARCH REPORT
## ON EUROPEAN PATENT APPLICATION NO.

EP 25 19 2880

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2026

| Patent document cited in search report | | Publication date | Patent family member(s) | | Publication date |
|---|---|---|---|---|---|
| EP 4304154 | A1 | 10-01-2024 | CN | 116888945 A | 13-10-2023 |
| | | | EP | 4304154 A1 | 10-01-2024 |
| | | | JP | 7148824 B2 | 06-10-2022 |
| | | | JP | 2022133611 A | 14-09-2022 |
| | | | US | 2024036958 A1 | 01-02-2024 |
| | | | WO | 2022186195 A1 | 09-09-2022 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202411059578